(19) Europäisches Patentamt
European Patent Office
Office européen des brevets

(11) **EP 4 553 716 A1**

(12) **EUROPEAN PATENT APPLICATION**

(43) Date of publication:
**14.05.2025 Bulletin 2025/20**

(21) Application number: **23209112.4**

(22) Date of filing: **10.11.2023**

(51) International Patent Classification (IPC):
**G06N 5/022** (2023.01)  **G06N 3/047** (2023.01)
**G06N 3/091** (2023.01)  **G06N 7/01** (2023.01)
**G06N 20/10** (2019.01)

(52) Cooperative Patent Classification (CPC):
**G06N 5/022; G06N 3/047; G06N 3/091; G06N 7/01; G06N 20/10;** G06N 3/0895

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Zimmer, Christoph**
**70563 Stuttgart (DE)**
• **Grangel Gonzalez, Irlan**
**70329 Stuttgart (DE)**
• **Simonis, Christian**
**71229 Leonberg (DE)**

(54) **DEVICES, DATA STRUCTURE, AND COMPUTER-IMPLEMENTED METHODS FOR MACHINE LEARNING USING SEMANTIC TECHNOLOGIES**

(57) Devices, data structure, and computer-implemented methods for machine learning, wherein a first method for machine learning comprises providing (402) a data structure of a database, wherein the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates, wherein the method comprises predicting (404) a plurality of tuples depending on the data structure, wherein a respective tuple of the plurality of tuples comprises at least two nodes of the set of nodes, and at least one relation of the set of relations, in particular two entities of the set of entities and an edge of the set of edges, or a subject, and an object of the set of subjects and objects, and a predicate of the set of predicates, wherein the method comprises predicting (406), for the plurality of tuples, an uncertainty about whether the respective tuple of the plurality of tuples classifies as a member of the set of tuples or not, selecting (408) a tuple from the plurality of tuples depending on the uncertainties predicted for the respective tuples, acquiring (410) a label (108) that indicates whether the selected tuple classifies as a member of the set of tuples, or not, and adding (414) the selected tuple to the set of tuples when the label (108) indicates (412) that the selected tuple classifies as member of the set of tuples, or not adding the selected tuple to the set of tuples otherwise, or when the label (108) indicates that the selected tuple classifies not as member of the set of tuples.

Fig. 4

EP 4 553 716 A1

**Description**

Background

The invention relates to devices, a data structure, and computer-implemented methods for machine learning, using semantic technologies.

Labelling of data may be used in machine learning in order to train a machine learning model with labelled data to increase the knowledge of the machine learning model.

Disclosure of the invention

The devices and methods for machine learning provides a data efficient labelling and training.

A first computer-implemented method for machine learning comprises providing a data structure of a database, wherein the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates, wherein the method comprises predicting a plurality of tuples depending on the data structure, wherein a respective tuple of the plurality of tuples comprises at least two nodes of the set of nodes, and at least one relation of the set of relations, in particular two entities of the set of entities and an edge of the set of edges, or a subject, and an object of the set of subjects and objects, and a predicate of the set of predicates, wherein the method comprises predicting, for the plurality of tuples, an uncertainty about whether the respective tuple of the plurality of tuples classifies as a member of the set of tuples or not, selecting a tuple from the plurality of tuples depending on the uncertainties predicted for the respective tuples, acquiring a label that indicates whether the selected tuple classifies as a member of the set of tuples, or not, and adding the selected tuple to the set of tuples when the label indicates that the selected tuple classifies as member of the set of tuples, or not adding the selected tuple to the set of tuples otherwise, or when the label indicates that the selected tuple classifies not as member of the set of tuples. Predicting the plurality of tuples provides predicted links in the data structure. The labelling ensures a self-learning system, which is capable of processing data from heterogenous data sources to label the predicted link. The label is requested for the predicted link that likely increases the performance with respect to link prediction more than other of the predicted links. This is a data efficient and resource-wise cheap way of labelling, as providing labels might be costly, e.g. due to expert's time to label them.

The method may comprise predicting the plurality of tuples with a first model that is trained to predict a tuple that comprises at least two nodes of the set of nodes, and at least one relation of the set of relations, in particular two entities of the set of entities and an edge of the set of edges, or a subject, and an object of the set of subjects and object, and a predicate of the set of predicates, depending on the data structure, and training the first model depending on the selected tuple and the label. The first model is capable of fast predictions due to more effective link prediction. Links may be predicted fast, e.g., to enable a search use case in a plant. A tuple is defined as an n-tuple which is a finite sequence of a list of objects. The tuple can therefore specifically comprise e.g. a triple, which is used in a knowledge graph in the course of semantic modelling.

The method may comprise checking, if the acquired label is trustworthy or not, and training the first model depending on the selected tuple and the label when the label is trustworthy, or not training the first model depending on the selected tuple and the label otherwise, or checking if the acquired label is plausible or not, and training the first model depending on the selected tuple and the label when the label is plausible, or not training the first model depending on the selected tuple and the label otherwise. This prevents that wrong labels are considered as ground truth.

The method may comprise acquiring the label from a second model that is configured to predict the label depending on the selected tuple, or acquiring the label from an expert or an instance that can provide ground truth data, in particular a test station or diagnostics system or an expert system. The second model and the expert are exemplary data sources for automated labelling and semi-automated labelling respectively.

Acquiring the label may comprise determining, in particular at a first device, a request for the label depending on the selected tuple, sending the request, in particular from the first device to a second device that comprises a user interface, or to a third device that comprises the second model, and receiving the label, in particular at the first device. The data source may be remote or local.

Acquiring the label may comprise sending the request and/or receiving the label via a telecommunication link that connects the devices at least temporarily and is arranged at least partially outside of the devices. The remote data source may be accessed independent of the location of the remote data source.

Selecting the tuple may comprise determining a subset of the plurality of tuples that comprises tuples that are not member of the set of tuples, and selecting the selected tuple depending on the uncertainties predicted for the respective tuples in the subset. This is an efficient way of selecting new tuples for the set of tuples.

Selecting the tuple from the plurality of tuples may comprise determining, for the plurality of tuples, a measure that indicates an amount of information that can be obtained about the data structure from a label for the respective tuple of the plurality of tuples, and selecting the selected tuple depending on the uncertainties and/or the measures that are determined for the plurality of tuples. This means, the predicted link that likely contributes most to the information gain about links in the data structure, is labelled.

Selecting the tuple from the plurality of tuples may comprise predicting a class of a plurality of classes for the respective triple, wherein the label indicates a class of the plurality of classes, and wherein the selected tuple classifies as member of the set of tuples if the predicted class and the class indicated by the label match, and wherein the selected tuple classifies not as member of the set of tuples if the predicted class and the class indicated by the label mismatch. This provides an efficient way of labelling in a multi class scenario.

A second method for machine learning may comprises receiving a request for a label, wherein the request comprises a tuple or an answer that corresponds to a tuple of a data structure of a database, whether the label indicates whether the tuple classifies as a member of a set of tuples of the data structure of the database, or not, requesting the label from an expert, in particular a human expert, or an instance that can provide ground truth data, in particular a test station or diagnostics system or an expert system, with a user interface, sending the label in response to the request, wherein the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates. This provides a semi-automated labelling.

A third method for machine learning comprises receiving a request for a label, wherein the request comprises a tuple or an answer that corresponds to a tuple of a data structure of a database, whether the label indicates whether the tuple classifies as a member of a set of tuples of the data structure of the database, or not, requesting the label from a model, sending the label in response to the request wherein the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates. This provides an automated labelling.

A device for machine learning comprises at least on processor and at least one memory, wherein the at least one processor is configured to execute instructions that, when executed by the at least one processor, cause the device to execute the first method, the second method, or the third method, wherein the at least one memory is configured to store the instructions.

A computer program comprises computer-readable instructions that, when executed by the computer, cause the computer to execute the first method, the second method, or the third method.

A data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates, wherein the data structure is configured to comprise a plurality of tuples that are predicted depending on the data structure, wherein a respective tuple of the plurality of tuples comprises at least two nodes of the set of nodes, and at least one relation of the set of relations, in particular two entities of the set of entities and an edge of the set of edges, or a subject, and an object of the set of subjects and objects, and a predicate of the set of predicates, wherein the data structure is configured to comprise an uncertainty about whether a respective tuple of the plurality of tuples classifies as a member of the set of tuples or not, wherein the data structure is configured to comprise a tuple that is selected from the plurality of tuples depending on the uncertainties predicted for the respective tuples, wherein the data structure is configured to comprise a label that indicates whether the selected tuple classifies as a member of the set of tuples, or not, wherein the data structure is configured for adding the selected tuple to the set of tuples when the label indicates that the selected tuple classifies as member of the set of tuples, or not adding the selected tuple to the set of tuples otherwise, or when the label indicates that the selected tuple classifies not as member of the set of tuples.

Further embodiments are easily derived from the following description and the drawing. In the drawing:

Fig. 1    schematically depicts a first exemplary system for machine learning,

Fig. 2    schematically depicts a second exemplary system for machine learning,

Fig. 3    schematically depicts a third exemplary system for machine learning,

Fig. 4    depicts a first method for machine learning,
Fig. 5    depicts a second method for machine learning,
Fig. 6    depicts a third method for machine learning.

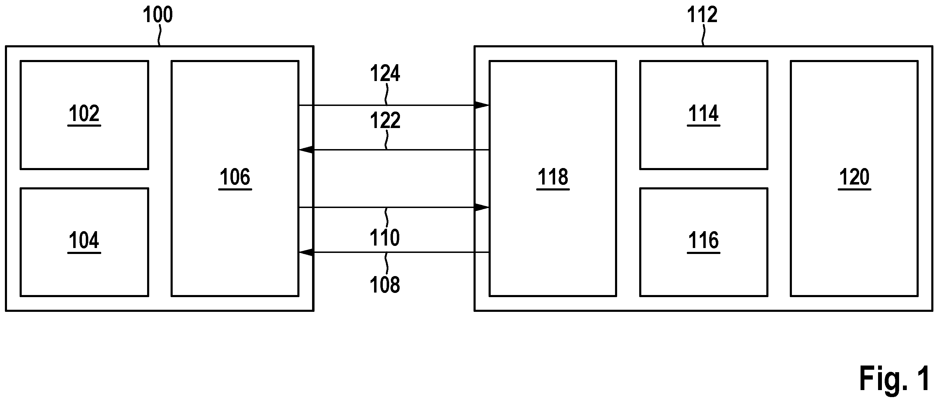

Figure 1 schematically depicts a first exemplary system for machine learning.

The first exemplary system comprises a first device 100 for machine learning.

The first device 100 comprises at least on processor 102 and at least one memory 104.

The at least one memory 104 is configured to store a first model.

The at least one memory 104 is configured to store a database.

The first device 100 may be configured as a database management system for the database. The first device 100 is for example configured to execute structured queries in a data structure of the database.

The data structure comprises a set of nodes, and a set of relations, and a set of tuples wherein a respective tuple of the set of tuples comprises at least two nodes of the set of nodes, and at least one relation of the set of relations.

The database comprises a structure that is configured to provide access to the set of nodes, and a set of relations, and the set of tuples that are stored in the structure.

The data structure may comprise a knowledge graph. The set of nodes may be a set of entities, in particular for the knowledge graph. The set of relations may be a set of edges, in particular for the knowledge graph. The set of tuples may be a set of tuples of the knowledge graph, wherein a respective tuple of the set of tuples comprises two entities of the set of entities and an edge of the set of edges. The tuples in the knowledge graph may be triples.

The data structure may comprise statements about semantic data. The set of nodes may be a set of subjects and objects for the statements. The set of relations may be a set of predicates for the statements. The set of tuples may be a set of tuples of the statements, wherein a respective tuple of the set of tuples comprises a subject, and an object from the set of nodes, and a predicate from the set of predicates. The statements may be triples.

The set of nodes may be a set of subjects and objects for a knowledge graph. The set of relations may be a set of predicates for the knowledge graph. The set of tuples may be a set of tuples of the knowledge graph, wherein a respective tuple of the set of tuples comprises a subject, and an object from the set of nodes, and a predicate from the set of predicates. The tuples in the knowledge graph may be triples.

The data structure comprises a set of relations, in particular a set of edges, or a set of predicates, and wherein the data base comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates

The first model is configured for providing answers to questions. The device 100 is for example configured to execute the structured query by providing the question as input to the first model and acquiring the answer with the first model.

According to an example, the question comprises a pattern, and the answer meets the pattern. The pattern may comprise a tuple. The pattern for example defines at least a part of the answer or at least a part of a tuple that corresponds to the answer. The first model is for example configured to determine at least one answer, or at least one tuple that meets the pattern, or to output an indication that answer, or no tuple meets the pattern. The first model may be configured to output the tuple as answer or determine the answer that corresponds to the tuple depending on the tuple.

The questions or answers may comprise text, a video image, audio data or alternatively also numerical values, specifically a prediction which is delivered with an uncertainty or tolerance or confidence interval

The first model may be configured to predict at least one tuple from the set of tuples depending on the question. The first model may be configured to predict at least one tuple that meets the pattern from the set of tuples depending on the pattern. This means, predicting the at least one tuple may comprise searching, or finding, or selecting the tuple in the set of tuples. The first model may be configured to predict, depending on the question, at least one tuple that is not in the set of tuples. The first model may be configured to predict, depending on the pattern, at least one tuple that meets the pattern, and is not in the set of tuples.

The first model is for example configured for predicting, depending on the question, e.g., the pattern, a tuple that comprises at least two nodes of the set of nodes, and at least one relation of the set of relations.

The first model is for example configured for predicting, depending on the question, e.g., the pattern, two entities of the set of entities and an edge of the set of edges.

The first model is for example configured for predicting, depending on the question, e.g., the pattern, a subject, and an object of the set of subjects and objects, and a predicate of the set of predicates.

An exemplary question or pattern for a predicted relation between two nodes may comprise a given node, and a given relation. The answer may comprise the given node, the given relation, and a predicted node. The answer may comprise a predicted node.

An exemplary question or pattern for a predicted relation between two nodes may comprise two given nodes. The answer may comprise the two given nodes, and a predicted relation. The answer may comprise a predicted relation.

An exemplary question or pattern for a predicted edge between two entities may comprise a given entity, and a given edge. The answer may comprise the given entity, the given edge, and a predicted entity. The answer may comprise a predicted entity.

An exemplary question or pattern for a predicted edge between two entities may comprise two given entities. The answer may comprise the two given entities, and a predicted edge. The answer may comprise a predicted edge.

An exemplary question or pattern for a predicted object may comprise a given subject, and a given predicate. The answer may comprise the given subject, the given predicate, and the predicted object. The answer may comprise a predicted object.

An exemplary question or pattern for a predicted subject may comprise a given object, and a given predicate. The answer may comprise the predicted subject, the given predicate, and the given object. The answer may comprise the predicted subject.

The first model may be configured to provide the answer to the question with an uncertainty that the answer is the answer to the question. The uncertainty is associated with the respective answer. The uncertainty may be delivered with a confidence interval or tolerance value, which can represent an absolute or relative tolerance value. The uncertainty associated with the respective answer quantifies the uncertainty of the first model with respect to the accuracy of the answer. The device 100 is for example configured to acquire, with the first model, the answer and the uncertainty associated with the answer.

The first model may be configured to represent the uncertainty with a value between 0 and 1, wherein 1 indicates that it is known that the answer is the answer to the question and 0 indicates that it is known that the answer is not the answer to the question is inexistent. Alternatively, the uncertainty can also be provided in form of a normal distribution or student t distribution without bounds or limits.

The first model may be configured to represent the uncertainty with a value that gives a probability of the answer to be the true answer and not a false answer to the question. In the example, an uncertainty of 0.5 indicates that it is unknown whether the answer is the answer to the question nor not. The first model may be configured to represent the uncertainty with different values than 0, 1 and values between 0 and 1.

The first model may be configured for predicting for the at least one tuple an uncertainty about whether the tuple classifies as a member of the set of tuples or not.

The uncertainty that the first model provides describes in a probabilistic way whether or not a tuple classifies as member of the set of tuples or not.

The first model may comprise an embedding model of the data structure, in particular the tuples of the set of tuples. The embedding may comprise a vector representation of the set of tuples, in particular a knowledge graph embedding.

The first model may comprise a link predictor.

The link predictor may be a graph neural network that is configured to predict tuples, and a respective uncertainty for the respective tuples depending on a similarity of vectors representing nodes, entities, or subjects and objects in the vector representation.

The link predictor may be a neural link predictor that is configured to predict tuples, and a respective uncertainty for the respective tuples. The neural link predictor comprises for example a Bayesian model, or a Bayesian Graph Neural Network, or a Graph Convolutional Gaussian Process model. The Graph Convolutional Gaussian Process model may comprise a kernel that allows to interpolate between node neighborhoods of different sizes as described in Felix L. Opolka, Pietro Liò, "Graph Convolutional Gaussian Processes for Link Prediction", 11 Feb 2020, https://arxiv.org/abs/2002.04337.

The device 100 is for example configured to predict the at least one tuple and the uncertainty with the Bayesian model, or the Bayesian Graph Neural Network, or the Graph Convolutional Gaussian Process.

The predicted uncertainty for the tuple is for example, the predictive uncertainty or predictive (co-)variance of the Bayesian model, or of the Graph Convolutional Gaussian Process for the tuple.

The first device 100 may be configured for active learning.

The first device 100 may be configured to predict with the neural link predictor whether the at least one tuple classifies as member of the set of tuples or not.

The first device 100 is for example configured to add the at least one tuple to the set of tuples in case the at least one tuple classifies as tuple of the set of tuples. The first device 100 is for example configured to store the at least one tuple in the set of tuples in case the at least one tuple classifies as tuple of the set of tuples in the data structure and/or the database. The first device 100 is for example configured to not add the at least one tuple to the set of tuples in case the at least one tuple classifies not as tuple of the set of tuples.

The first device 100 may be configured to predict a plurality of tuples with the neural link predictor.

The first device 100 may be configured to predict the uncertainty for the plurality of tuples with the first model, in particular with the neural link predictor.

The first device 100 may be configured to determine whether a respective tuple of the plurality of tuples classifies as a member of the set of tuples or not depending on the uncertainty.

The first device 100 may be configured to select a tuple from the plurality of tuples as tuple that classifies as a member of the set of tuples, e.g., in case the uncertainty is lower than a first uncertainty, e.g., in case the value of the uncertainty is 1 or larger than a threshold, for example 0,9.

The first device 100 may be configured to determine, that a tuple from the plurality of tuples classifies not as a member of the set of tuples, e.g., in case the uncertainty is lower than a second uncertainty, e.g., in case the value of the uncertainty is 0 or less than a threshold, for example 0,1.

The first device 100 may be configured to determine, that it is unknown, whether a tuple from the plurality of tuples classifies or classifies not as a member of the set of tuples, e.g., in case the uncertainty is between the first uncertainty and the second uncertainty, e.g., between the thresholds.

Labelling of a tuple, for that it is unknown, whether the tuple classifies as member of the set of tuples or not, is costly. The first device 100 may be configured to label only selected tuples that likely reduce the uncertainty of the first model.

The first device 100 may be configured to select, depending on the uncertainties predicted for the respective tuples, a selected tuple from the plurality of tuples in order to determine, whether the selected tuple classifies or classifies not as a member of the set of tuples.

The device 100 may be configured to determine a ranking of the tuples with an acquisition function, wherein the ranking ranks the tuples depending on the uncertainty associated with the respective tuple. The acquisition function may consider a measure that indicates an amount of information that can be obtained about the data structure from a label for the respective tuple of the plurality of tuples. The measure may be mutual information, MI, or the entropy, in particular the Shannon entropy. The measure for example depends on the plurality of tuples.

Selecting the tuple from the plurality of tuples depending on the uncertainties may comprise selecting the tuple as the selected tuple that is associated with the most uncertainty depending on the uncertainties. Selecting the tuple from the plurality of tuples depending on the measure may comprise selecting the tuple as the selected tuple that is associated with the largest measure.

The device 100 may be configured to select the highest-ranking tuple as the selected tuple.

In order to determine, the whether the selected tuple is or is not a member of the set of tuples, the first device 100 may comprise an interface 106 that is configured to acquire a label 108 that indicates whether the selected tuple classifies or classifies not as a member of the set of tuples.

The interface 106 may be configured to send a request 110 for the label 108.

The request 110 comprises for example the selected tuple or the answer that corresponds to the selected tuple.

The first device 100 may be configured to add the selected tuple to the set of tuples when the label 108 indicates that the selected tuple is a member of the set of tuples. The first device 100 may be configured to not add the selected tuple to the set of tuples otherwise, or when the label 108 indicates that the selected tuple is not as member of the set of tuples

The first device 100 may be configured for training the first model and/or the neural link predictor depending on the selected tuple, or the answer that corresponds to the selected tuple, and the label 108.

The first model may be configured to predict a class of a plurality of classes for the tuples of the plurality of tuples. Selecting the tuple from the plurality of tuples may comprise predicting a class of the plurality of classes for the respective triple.

The label 108 may indicate a class of the plurality of classes.

According to an example, the selected tuple classifies as member of the set of tuples if the predicted class and the class indicated by the label 108 match.

According to an example, the selected tuple classifies not as member of the set of tuples if the predicted class and the class indicated by the label 108 mismatch.

According to the first exemplary system, the first device 100 may be configured to acquire the label 108 from a second device 112 for machine learning.

The second device 112 is configured to request the label 108 from an expert. The expert may be human, or a machine-based instance that can provide ground truth data, like a test station or diagnostics system or an expert system. In addition, it can also be implemented as a combination of machine and human labelling. E.g. it can be implemented with a majority decision or utilizing the law of large numbers using a plurality of instances which can be human or machine based.

The second device 112 is for example a computer terminal, a personal computer, a mobile phone, in particular a smart phone, or a handheld computing device, e.g., a tablet computer.

The second device 112 comprises at least on processor 114, at least one memory 116. The second device 112 comprises a first interface 118 that is configured to receive the request 110, and to send the label 108 in response to the request 110. The second device 112 comprises a user interface 120. The user interface 120 comprises for example, a display that is configured to display the request 110 to the expert. The user interface 120 comprises for example an input that is configured to detect the label 108 of the expert.

According to the first exemplary system, the first device 100 may be configured to receive a question 122 and determine an answer 124 to the question.

The interface 106 of the first device 100 is for example configured to receive a question 122. According to the first exemplary system, the user interface 120 may be configured to detect the question 122 from a user input, e.g., a voice or text input, and the interface 118 of the second device 112 is configured to send the question 122. The question 122 may be received by the interface 106 of the first device 100 from another device external to the first device 100.

The first device 100 is configured to map the question 122 with the first model to the answer 124.

The interface 106 of the first device 100 is configured to send the answer 124. According to the first exemplary system, the interface 118 of the second device 112 is configured to receive the answer 124 and the user interface 120 is configured to output, e.g., display or read, the answer to a user. The answer 124 may be sent by the interface 106 to another device external to the first device 100.

The second device 112 is external to the first device 100. The second device 112 may be remote from the first device 100. According to the first exemplary system, the question is sent, in particular via a telecommunication link, by the first device 100 to the second device 112. According to the first exemplary system, the answer is sent, in particular via a telecommunication link, by the second device 112 to the first device 100.

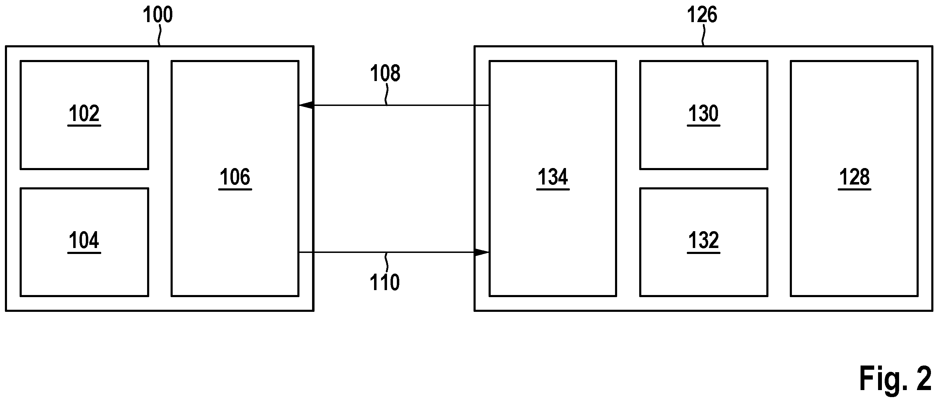

Figure 2 schematically depicts a second exemplary system for machine learning.

The second exemplary system comprises the first device 100.

The second exemplary system comprises a third device 126 for machine learning.

The third device 126 is configured to request the label 108 from a second model 128. The second model 128 may be an external model, e.g., an expert system.

The third device 126 comprises at least on processor 130, at least one memory 132. The third device 126 comprises an interface 134 that is configured to receive the request 110, and to send the label 108 in response to the request 110. The third device 126 comprises the second model 128. The second model 128 is configured to map the request 110 to the label 108.

The third device 126 is external to the first device 100. The third device 126 may be remote from the first device 100. According to the second exemplary system, the question is sent, in particular via a telecommunication link, by the first device 100 to the third device 126. According to the second exemplary system, the answer to the question is sent, in particular via a telecommunication link, by the third device 126 to the first device 100.

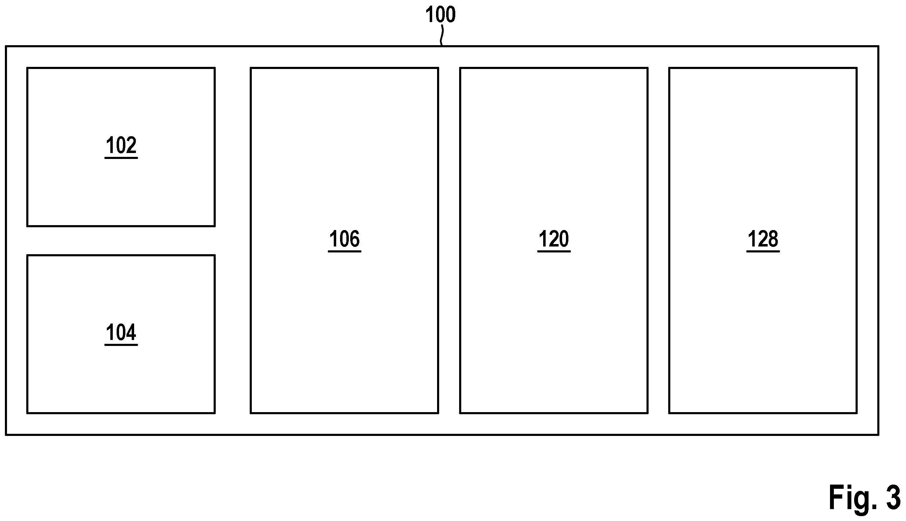

Figure 3 schematically depicts a third exemplary system for machine learning.

The third exemplary system comprises the first device 100. According to the third exemplary system, the first device 100 is configured to internally determine the answer to the question.

According to the third exemplary system, the first device 100 may comprise the second model 128 and/or the user interface 120 in addition to the first interface 106 of the first device 100 or instead of the interface 106 of the first device 100.

The at least one processor 102 of the first device 100 is configured to execute first instructions that, when executed by the at least one processor 102 of the first device 100, cause the first device 100 to execute a first method for machine learning. The at least one memory 104 of the first device 100 is configured to store the first instructions.

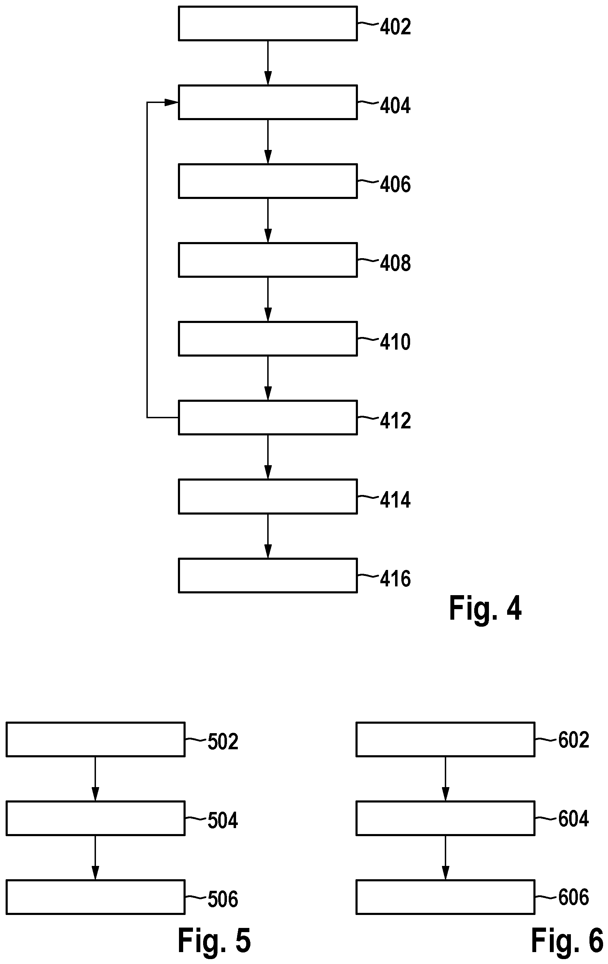

Figure 4 depicts a flowchart comprising steps of the first method.

The first method comprises a step 402.

The step 402 comprises providing the data structure of the database.

The data structure comprises the set of nodes, in particular the set of entities, or the set of subjects and objects.

The data structure comprises the set of relations, in particular the set of edges, or the set of predicates.

The data structure comprises the set of tuples.

A respective tuple of the set of tuples comprises at least two nodes of the set of nodes, and at least one relation of the set of relations.

This means, a tuple of the data structure that comprises the set of entities and the set of edges comprises two entities of the set of entities and an edge of the set of edges.

This means, a tuple of the data structure that comprises the set of subjects and objects comprises a subject, and an object of the set of subjects and object, and a predicate of the set of predicates.

The first method comprises a step 404.

The step 404 comprises predicting a plurality of tuples depending on the data structure.

A respective tuple of the plurality of tuples comprises at least two nodes of the set of nodes, and at least one relation of the set of relations.

This means, a tuple of the plurality of tuples that is predicted for the data structure that comprises the set of entities and the set of edges comprises two entities of the set of entities and an edge of the set of edges.

This means, a tuple of the plurality of tuples that is predicted for the data structure that comprises the set of subjects and objects comprises a subject, and an object of the set of subjects and object, and a predicate of the set of predicates.

According to an example, the tuple is predicted with the first model.

The first method comprises a step 406.

The step 406 comprises predicting, for the plurality of tuples, an uncertainty about whether the respective tuple of the plurality of tuples classifies as a member of the set of tuples or not.

According to an example, the uncertainty is predicted with the first model.

The first method comprises a step 408.

The step 408 comprises selecting a tuple from the plurality of tuples depending on the uncertainties predicted for the respective tuples.

Selecting the tuple may comprise determining a subset T\T1 of the plurality of tuples T that are not member of the set of tuples T1.

Selecting the tuple may comprise selecting the selected tuple depending on the uncertainties predicted for the respective tuples in the subset T\T1.

Selecting the tuple from the plurality of tuples may additionally or instead comprise determining, for the plurality of tuples, the measure that indicates an amount of information that can be obtained about the data structure from a label for the respective tuple of the plurality of tuples.

For example, the uncertainty or the measure or a function of those for the respective tuple of the plurality of tuples is associated with the respective tuple. For example, the tuples in the plurality of tuples are ranked by the value of the product. For example, the tuple that is associated with the largest value of the product is selected as selected tuple.

Selecting the tuple from the plurality of tuples may comprise predicting a class of a plurality of classes for the respective triple.

The label 108 may indicate a class of the plurality of classes.

According to an example, the selected tuple classifies as member of the set of tuples if the predicted class and the class indicated by the label 108 match.

According to an example, the selected tuple classifies not as member of the set of tuples if the predicted class and the class indicated by the label 108 mismatch.

The first method comprises a step 410.

The step 410 comprises acquiring the label 108 that indicates whether the selected tuple classifies as a member of the set of tuples, or not.

The first method may comprise acquiring the label 108 from the second model 128 or from the expert.

Acquiring the label 108 may comprise determining, the request 110 for the label 108 depending on the selected tuple. Acquiring the label 108 may comprise sending the request 110, particular from the first device 100 to the second device 112, or to the third device 126.

Acquiring the label 108 may comprise receiving the label 108, in particular at the first device 100.

Acquiring the label 108 may comprise sending the request 110 and/or receiving the label 108 via a telecommunication link. The telecommunication link may connect the first device 100 and the second device 112, or the first device 100 and the third device 126, in particular at least temporarily. The telecommunication link may be arranged at least partially outside of the first device, the second device 112, and/or the third device126.

The first method comprises a step 412.

The step 412 comprises determining whether the label 108 indicates that the selected tuple classifies as member of the set of tuples, or not.

In case the label 108 indicates that the selected tuple classifies as member of the set of tuples, a step 414 is executed. Otherwise, or in case the label 108 indicates that the selected tuple classifies not as member of the set of tuples, step 404 may be executed to predict different tuples, or the method may end, e.g., in case no new tuples that classify as member of the set of tuples are found.

The step 414 comprises adding the selected tuple to the set of tuples. The selected tuple may be stored in the data structure and/or the database.

Afterwards the step 416 is executed.

The step 416 comprises training the first model in particular the neural link predictor depending on the selected tuple and the label 108.

An exemplary algorithm for a knowledge graph that comprises triples of a subject, a predicate and an object, and for that the link predictor provides a binary uncertainty, e.g., true, false, comprises yielding for the triples in the knowledge graph a probability to be true, meaning being part of the knowledge graph, P( triple = true). It holds P( triple = false ) = 1 - P( triple = true).

Let T be a set of theoretically possible triples for the knowledge graph, and T1 a subset of T, namely the set of triples that the knowledge graph is based on, and T2 a subset of T that comprises triples for that it is known that they classify not as triples of the set of triples, e.g., P(triple = false ) = 1, wherein P is the uncertainty provided by the link predictor.

```
1        For i = 1 : N
```

$$2 \qquad new_{triple} * = \underset{triple\ in\ T\backslash(T1,T2)}{argmin} \left( P(triple = true) - 0.5 \right)^2$$

```
3        Get label I for triple new_triple* (either true or false)
4        If I=true : T1 = T1 ∪ new_triple* else : T2 = T2 ∪ new_triple*   end
5        Update knowledge graph and/or re-train link predictor
6        end
```

The argmin acquisition function covers how certain the link predictor is about the triple classifying as triple of the set of triples that the knowledge graph is based on.

Optionally, the acquisition function does not only cover, how certain the link predictor is, but also how representative the expected label I would be for other search tasks and how many other network participants or link predictions would benefit from this label.

To this end, line 2 of the algorithm could be replaced by

$$2' \qquad new_{triple} * = \underset{triple\ in\ T\backslash(T1,T2)}{argmin} MI(\ triple, T\backslash(T1, T2, triple))$$

An exemplary algorithm for a knowledge graph in a multi class scenario, in which an element $e \in E$ in a set of elements $E$ can be part of exactly one class $c_i \in C$ of a set of classes C may comprise determining for the elements $e \in E$ the respective uncertainty P($e$ in $c_i$), i.e., the probability that the element $e$ is classifies in class $c_i$ for the classes $c_i \in C$. This results in a discrete probability distribution over the classes. The measure to determine the next element $e$* to be labelled may be the entropy over this probability distribution:

$$e^* = argmax\ Entropy(\ P(\ e\ in\ c_i))$$

Alternatively the element $e$* may be chosen at random. As an alternative, or additionally to the entropy, the element $e$* may be chosen that has the lowest maximal uncertainty considering the uncertainty P($e$* in $c_i$) over the classes $c_i \in C$.

As an alternative, or additionally to the entropy, or the lowest maximal uncertainty, the mutual information may be used

Possible classes $c_i$ in a use case may be locations or identifiers, e.g., names of plants to which a certain machine or equipment feature can be assigned.

The certain machine may be a machine from a set of machines, that are configured to execute at least one process of a set of processes. The machines may be configured to execute at least one process from a set of processes. A machine is implemented at a station of a set of stations that are configured to implement at least one machine of the set of machines. At least some of the machines may be configured to execute only a subset of the processes. At least some of the stations may only be configured to implement a subset of the machines. A machine may belong to a plant of a set of plants.

The set of predicates of the knowledge graph may comprise a predicate "belongsTo", "executesProcess", "isImplementedBy". The set of subjects and objects of the knowledge graph may comprise the processes of the set of processes, the machines of the set of machines, the stations of the set of stations, and the plants of the set of plants.

A multi-classification problem which may be solved with the algorithm for the knowledge graph in the multi class scenario is:

- Station executesProcess Process,
- Machine isImplementedBy Station

wherein "Station", and "Process", and "Machine" are variables of the multi classification problem for subjects and/objects of the set of subjects and objects for the knowledge graph, from the set of stations, the set of processes, and the set of machines respectively.

The solution to the multi-classification problem according to an example provides an assignment of the processes in the set of processes to machines in the set of machines.

Before solving the multi-classification problem, a conditioning may be executed. The conditioning may comprise determine a heterogeneous subgraph of the knowledge graph depending on the predicate "belongsTo" and the classification problem:

Machine belongsTo Plant

wherein Machine and Plant are variables of the classification problem for subjects and/objects of the set of subjects and objects for the knowledge graph, from the set of machines, and the set of plants respectively.

The knowledge graph may be used to answer questions regarding the machines. For example, the knowledge graph may be used to answer a question "To which plant does machine YY belong to?". For example, the set of machines comprises the machine YY. The question comprises the machine YY as subject, and "belongsTo" as predicate. The answer to the question comprises the plant of the set of plants that solves the classification problem.

The steps 404 to 416 may be repeated iteratively, in particular in a self-learning, to re-train and collect new labels.

A semi-automated labelling by the human expert may take place in a decentralized way, e.g. using the second device 112.

The at least one processor 114 of the second device 112 is configured to execute second instructions that, when executed by the at least one processor 114 of the second device 112, cause the second device 112 to execute a second method for machine learning. The at least one memory 116 of the second device 112 is configured to store the second instructions.

Figure 5 depicts a flowchart comprising steps of the second method.

The second method comprises a step 502.

The step 502 comprises receiving the request 110.

Afterwards a step 504 is executed.

Step 504 comprises requesting the label 108 from the expert, in particular the human expert, with the user interface 120.

For example, the request 110 is displayed to the expert, in particular on the display. For example, the input of the expert is detected, in particular with the input of the user interface 120. According to an example, the input of the expert comprises the label 108. According to an example, the input of the expert is mapped to the label 108. The label 108 may indicate true, or false. The label 108 may indicate the class of the plurality of classes.

Afterwards a step 506 is executed.

Step 506 comprises sending the label 108 in response to the request 110.

An automated labelling with the second model 128 may take place using the third device 126.

The at least one processor 130 of the third device 126 is configured to execute third instructions that, when executed by the at least one processor 130 of the third device 126, cause the third device 126 to a third method for machine learning. The at least one memory 132 of the third device 126 is configured to store the third instructions.

Figure 6 depicts a flowchart comprising steps of the third method.

The third method comprises a step 602.

The step 602 comprises receiving the request 110.

Afterwards a step 604 is executed.

Step 604 comprises requesting the label 108 from the second model 128.

According to an example, the output of the second model 128 comprises the label 108. According to an example, the output of the second model 128 is mapped to the label 108. The label 108 may indicate true, or false. The label 108 may indicate the class of the plurality of classes.

Afterwards a step 606 is executed.

Step 606 comprises sending the label 108 in response to the request 110.

Optionally, labelling may comprise checking, in a validation step, if the answer of the expert or the second model 128 is trustworthy. The validation step may comprise evaluation a historic trust worthiness of the expert or the second model 128, or determining whether the answer of the expert or the second model 128 is in an expected range. The range for example defines a condition that a valid answer has to meet. Answers that fail to meet the condition are outside of the range and are considered invalid.

The first model may be configured to determine the range for a tuple that is predicted by the first model. The link predictor may be configured to determine the range for a tuple that is predicted by the link predictor.

The range may be determined with the first model or the link predictor.

**Claims**

1. First computer-implemented method for machine learning, **characterized in that** the method comprises providing (402) a data structure of a database, wherein the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates, wherein the method comprises predicting (404) a plurality of tuples depending on the data structure, wherein a respective tuple of the plurality of tuples comprises at least two nodes of the set of nodes, and at least one relation of the set of relations, in particular two entities of the set of entities and an edge of the set of edges, or a subject, and an object of the set of subjects and objects, and a predicate of the set of predicates, wherein the method comprises predicting (406), for the plurality of tuples, an uncertainty about whether the respective tuple of the plurality of tuples classifies as a member of the set of tuples or not, selecting (408) a tuple from the plurality of tuples depending on the uncertainties predicted for the respective tuples, acquiring (410) a label (108) that indicates whether the selected tuple classifies as a member of the set of tuples, or not, and adding (414) the selected tuple to the set of tuples when the label (108) indicates (412) that the selected tuple classifies as member of the set of tuples, or not adding the selected tuple to the set of tuples otherwise, or when the label (108) indicates that the selected tuple classifies not as member of the set of tuples.

2. The method according to claim 1, **characterized in that** the method comprises predicting (404) the plurality of tuples with a first model that is trained to predict a tuple that comprises at least two nodes of the set of nodes, and at least one relation of the set of relations, in particular two entities of the set of entities and an edge of the set of edges, or a subject, and an object of the set of subjects and object, and a predicate of the set of predicates, depending on the data structure, and training (416) the first model depending on the selected tuple and the label (108).

3. The method according to claim 2, **characterized in that** the method comprises checking, if the acquired label (108) is trustworthy or not, and training (416) the first model depending on the selected tuple and the label (108) when the label (108) is trustworthy, or not training the first model depending on the selected tuple and the label (108) otherwise, or checking if the acquired label (108) is plausible or not, and training (416) the first model depending on the selected tuple and the label (108) when the label (108) is plausible, or not training the first model depending on the selected tuple and the label (108) otherwise.

4. The method according to one of the preceding claims, **characterized in that** the method comprises acquiring (410) the label (108) from a second model (128) that is configured to predict the label (108) depending on the selected tuple, or acquiring (410) the label (108) from an expert or an instance that can provide ground truth data, in particular a test station or diagnostics system or an expert system.

5. The method according to one of the claim 4, **characterized in that** acquiring (410) the label (108) comprises determining, in particular at a first device (100), a request (110) for the label (108) depending on the selected tuple, sending the request (110), in particular from the first device (100) to a second device (112) that comprises a user interface (120), or to a third device (126) that comprises the second model (128), and receiving the label (108), in particular at the first device (100).

6. The method according to claim 5, **characterized in that** acquiring (410) the label (108) comprises sending the request (110) and/or receiving the label (108) via a telecommunication link that connects the devices (100, 112; 126) at least temporarily and is arranged at least partially outside of the devices (100, 112; 126).

7. The method according to one of the preceding claims, **characterized in that** selecting (408) the tuple comprises determining a subset of the plurality of tuples that comprises tuples that are not member of the set of tuples, and selecting the selected tuple depending on the uncertainties predicted for the respective tuples in the subset.

8. The method according to one of the preceding claims, **characterized in that** selecting (408) the tuple from the plurality of tuples comprises determining, for the plurality of tuples, a measure (MI) that indicates an amount of information that can be obtained about the data structure from a label for the respective tuple of the plurality of tuples, and selecting the selected tuple depending on the uncertainties and/or the measures that are determined for the plurality of tuples.

9. The method according to one of the preceding claims, **characterized in that** selecting (408) the tuple from the plurality of tuples comprises predicting a class of a plurality of classes for the respective triple, wherein the label (108) indicates a class of the plurality of classes, and wherein the selected tuple classifies as member of the set of tuples if the predicted class and the class indicated by the label (108) match, and wherein the selected tuple classifies not as member of the set of tuples if the predicted class and the class indicated by the label (108) mismatch.

10. Second computer-implemented method for machine learning, **characterized in that** the method comprises receiving (502) a request (110) for a label (108), wherein the request (110) comprises a tuple or an answer that corresponds to a tuple of a data structure of a database, whether the label (108) indicates whether the tuple classifies as a member of a set of tuples of the data structure of the database, or not, requesting (504) the label (108) from an expert, in particular a human expert, or an instance that can provide ground truth data, in particular a test station or diagnostics system or an expert system, with a user interface (120), sending (506) the label (108) in response to the request (110), wherein the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates.

11. Third computer-implemented method for machine learning, **characterized in that** the method comprises receiving (602) a request (110) for a label (108), wherein the request (110) comprises a tuple or an answer that corresponds to a tuple of a data structure of a database, whether the label (108) indicates whether the tuple classifies as a member of a set of tuples of the data structure of the database, or not, requesting (604) the label (108) from a model (128), sending (606) the label (108) in response to the request (110) wherein the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates.

12. Device (100; 112; 126) for machine learning, **characterized in that** the device (100; 112; 126) comprises at least on processor (102; 114; 130) and at least one memory (104; 116; 132), wherein the at least one processor (102; 114; 130) is configured to execute instructions that, when executed by the at least one processor (102; 114; 130), cause the device (100; 112; 126) to execute the method according to one of the claims 1 to 10, wherein the at least one memory (104; 116; 132) is configured to store the instructions.

13. Computer program, **characterized in that** the computer program comprises computer-readable instructions that, when executed by the computer, cause the computer to execute the method according to one of the claims 1 to 11.

14. Data structure, **characterized in that** the data structure comprises a set of nodes, in particular a set of entities, or a set of subjects and objects, wherein the data structure comprises a set of relations, in particular a set of edges, or a set of predicates, and wherein the data structure comprises a set of tuples, wherein a respective tuple of the set of tuples comprises at least two nodes of the set of nodes, and at least one relation of the set of relations, in particular two entities of the set of entities and an edge of the set of edges, or a subject, and an object of the set of subjects and object, and a predicate of the set of predicates, wherein the data structure is configured to comprise a plurality of tuples that are predicted depending on the data structure, wherein a respective tuple of the plurality of tuples comprises at least two nodes of the set of nodes, and at least one relation of the set of relations, in particular two entities of the set of entities and an edge of the set of edges, or a subject, and an object of the set of subjects and objects, and a predicate of the set of predicates, wherein the data structure is configured to comprise an uncertainty about whether a respective tuple of the plurality of tuples classifies as a member of the set of tuples or not, wherein the data structure is configured to comprise a tuple that is selected from the plurality of tuples depending on the uncertainties predicted for the respective tuples, wherein the data structure is configured to comprise a label (108) that indicates whether the selected tuple classifies as a member of the set of tuples, or not, wherein the data structure is configured for adding the selected tuple to the set of tuples when the label (108) indicates that the selected tuple classifies as member of the set of tuples, or not adding the selected tuple to the set of tuples otherwise, or when the label (108) indicates that the selected tuple classifies not as member of the set of tuples.

Fig. 1

**Fig. 2**

EP 4 553 716 A1

Fig. 3

Fig. 4

Fig. 5

Fig. 6

Europäisches
Patentamt

European
Patent Office

Office européen
des brevets

# EUROPEAN SEARCH REPORT

**Application Number**

EP 23 20 9112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEO SEUNGMIN ET AL: "Active Learning for Knowledge Graph Schema Expansion", IEEE TRANSACTIONS ON KNOWLEDGE AND DATA ENGINEERING, IEEE SERVICE CENTRE , LOS ALAMITOS , CA, US, vol. 34, no. 12, 1 April 2021 (2021-04-01) , pages 5610-5620, XP011926679, ISSN: 1041-4347, DOI: 10.1109/TKDE.2021.3070317 [retrieved on 2021-04-01] * abstract; figures 1, 2, 3 * * section 1, lines 12-14 * * section 2.3 * * section 3.1, lines 7-9 * * section 3.2 * * section 3.3 * * section 4.3, lines 1-5 * * section 5, lines 6-16 * * section 5, lines 20-24 * * equation (8) * ----- | 1-14 | INV. G06N5/022 G06N3/047 G06N3/091 G06N7/01 G06N20/10 |
| X | GRANGEL-GONZALEZ IRLAN ET AL: "Link Prediction with Supervised Learning on an Industry 4.0 related Knowledge Graph", 2021 26TH IEEE INTERNATIONAL CONFERENCE ON EMERGING TECHNOLOGIES AND FACTORY AUTOMATION (ETFA ), IEEE, 7 September 2021 (2021-09-07), pages 1-8, XP034032949, DOI: 10.1109/ETFA45728.2021.9613314 [retrieved on 2021-11-11] * abstract; figures 1, 2; table VII * * section I, lines 40-47 * * section III-B, lines 1-6 * * section IV-A * * section IV-C, lines 4-7 * * section IV-E, lines 1-6 * * section IV-E, lines 12-15 * * section IV-F, lines 1-2 * ----- | 1-9,12, 13 | **TECHNICAL FIELDS SEARCHED (IPC)**<br><br>G06N |

The present search report has been drawn up for all claims

| Place of search | Date of completion of the search | Examiner |
|---|---|---|
| The Hague | 15 April 2024 | Aoun, Marc |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FELIX L. OPOLKA** ; **PIETRO LIÒ**. *Graph Convolutional Gaussian Processes for Link Prediction*, 11 February 2020, https://arxiv.org/abs/2002.04337